# EUROPEAN PATENT SPECIFICATION

(11) **EP 2 119 154 B1**
(45) Date of publication and mention of the grant of the patent: **11.07.2018**
(21) Application number: 07860749.6
(22) Date of filing: 28.12.2007
(51) Int. Cl.: H04L 12/66, H04L 29/08, H04L 12/58, H04L 29/06

(54) **SYSTEM AND METHOD FOR DEFERRED MESSAGE EXPIRY REMINDER**
SYSTEM UND VERFAHREN ZUR ERINNERUNG AN DEN ABLAUF EINER ZURÜCKGESTELLTEN NACHRICHT
SYSTÈME ET PROCÉDÉ DE RAPPEL D'EXPIRATION DE MESSAGE DIFFÉRÉ

(30) Priority: 29.12.2006 IN CH24932006
(43) Date of publication of application: 18.11.2009
(73) Proprietor: Samsung Electronics Co., Ltd., Suwon-si, Gyeonggi-do, 443-742 (KR)
(72) Inventor: OH, Jae-Kwon, Seoul 137-130 (KR); JEEDIGUNTA, Venkateswar, Bangalore 560075 (IN); PATTAN, Basavaraj Jayawant, Bangalore Karnataka 5600093 (IN)
(74) Representative: HGF Limited
(86) International application number: PCT/KR2007/006971
(87) International publication number: WO 2008/082205

(56) References cited:
- EP-A1- 1 530 380
- CN-A- 1 794 722
- KR-A- 20060 095 900
- US-A- 6 094 694
- US-A1- 2004 249 900
- US-A1- 2006 046 757
- US-A1- 2006 046 758

## Description

### [Technical Field]

The present invention relates to the field of mobile communications. The invention relates to various OMA developed applications over SIP like Instant Messaging, Push to talk over Cellular and any other future applications like Converged IP Messaging (CPM). This invention relates to those applications where the messages arriving for a User, who is offline (not registered currently), are stored temporarily by the Service Provider. More particularly, the present invention relates to system and method for deferred message expiry reminder.

### [Background Art]

US Patent titled "a method for holding a message for a recipient" relates to the field of mobile based message delivery. The patent application describes a method for holding a MMS message for a user. A reminder message is sent to the user about the held MMS message indicating the time of expiry for the MMS message. However, the patent application does not describe a method for holding a SIP based message and sending reminder for the same.

### Existing art for deferred messages:

As an example, Figure-1 depicts OMA developed solution for Deferred Messages in SIMPLE IM. Similar solutions exist for other applications like PoC.

OMA defined Deferred Message Metadata has the following format:
The root element of the Deferred Messages Metadata XML document is <history-list> which contains one or more <history> elements. The <history-list> MAY include any other attributes from any other namespaces for the purposes of extensibility.

Each <history> element contains supplementary descriptive information regarding the Deferred Message in question. The <history> element:
1. SHALL include a <size> element representing the size of the stored content;
2. MAY include an <expiry> element representing the date at which the message expires;
3. MAY include a <subject> element representing the Subject header field of the SIP request;
4. SHALL include a <pager> element containing:
   a) a mandatory <time-stamp> element representing the creation time of the message;
   b) a mandatory <from> element taken from the "From" header field of the SIP request;
   c) a mandatory <to> element taken from the "To" header field of the SIP request always filled if the message is sent to one IM user;
5. SHALL include a "date" attribute representing the date when the message was sent. This attribute SHALL not exceed the precision of the day of the month;
6. SHALL include a "history-reference" attribute representing the complete path and unique identifier of the actual content of the message;
The flow diagram in Figure-1 can be briefly explained in the following way:
Consider that an offline user (Charlie) gets back on line and receives the following notification indicating that there are two text messages waiting to be retrieved:
While a user (Charlie) is offline:
   Step 1- Step 2. Alice sends an IM with SIP MESSAGE method, the Message is accepted by Charlie's Message Server and stored with a unique Identifier
   Step 2- Step 9. Joe sends an IM using SIP INVITE, the Message is accepted by Charlie's Message Server (Message Store), and stored with a unique identifier
While Charlie gets back online:
   Step 10- Step 13. Charlie gets notification via SIP SUBSCRIBE/NOTIFY of the summary of the stored messages waiting to be retrieved. Message headers such as To, From, Date, Subject, and Message-ID included for each message.

**[Table 1]**

| |
|---|
| ```
   NOTIFY sip:charlie@pc.example.com SIP/2.0
   To: <sip:charlie@example.com>;tag=78923
   From: <sip:mailserver.example.com>;tag=4442
   Date: Mon, 10 Jul 2000 04:28:53 GMT
   Contact: <sip:mailserver.example.com>
   Call-ID: adsf0923jsdjw
   CSeq: 31 NOTIFY
   Subscription-State: active;expires=600000
   Event: ua-profile
   Content-Type: application/vnd.oma.deferred+xml
   Content-Length: (...)
   <?xml version="1.0" encoding="UTF-8"?>
``` |
| ```
    <history-list xmlns="urn:oma:xml:history-list">
                   <history date="2000-07-09" history-
                   reference="32098d@mailserver.example.com">
       <size>10</size>
       <expiry>2000-07-15T21:13:00.0Z</expiry>
       <subject>carpool tomorrow?</subject>
       <pager>
        <time-stamp>2000-07-09T21:13:00.0Z</time-stamp>
         <from>alice@example.org</from >
         <to>charlie@example.com</to>
        </pager>
      </history>
                   <history date="2000-07-09" history-
                   reference="d0982dkjs@mailserver.example.com">
       <size>18</size>
     <expiry>2000-07-17T21:25:12.0Z</expiry>
       <subject>HELP! at home ill, present for me please</subject>
       <pager>
        <time-stamp>2000-07-09T21:25:12.0Z</time-stamp>
         <from>Joe@example.net</from >
         <to>charlie@example.com</to>
        </pager>
      </history>
      </history-list>
``` |

Step 14. Let us assume that Charlie does not want to retrieve immedi
ately and hence defers further.

Step 15. Some of the messages waiting for retrieval are expired and hence Server deletes those messages. Let us assume message from Alice is expired and deleted.

Step 16-17. Charlie gets updated notification via SIP NOTIFY of the deleted messages. Message headers such as To, From, Date, Subject, and Message-ID included for each message, see below:

**[Table 2]**

| |
|---|
| ```
    NOTIFY sip:charlie@pc.example.com SIP/2.0
    To: <sip:charlie@example.com>;tag=78923
    From: <sip:mailserver.example.com>;tag=4442
    Date: Mon, 10 Jul 2000 04:28:53 GMT
    Contact: <sip:mailserver.example.com>
    Call-ID: adsf0923jsdjw
    CSeq: 31 NOTIFY
    Subscription-State: active;expires=600000
    Event: ua-profile
    Content-Type: application/xcap-diff+xml
    Content-Length: (...)
    <?xml version="1.0" encoding="UTF-8"?>
    <xcap-diff>
    <document>
     <change-log>
      <remove>
                    <history date="2000-07-09" history-
                    reference="32098d@mailserver.example.com">
         <size>10</size>
         <expiry>2000-07-15T21:13:00.0Z</expiry>
         <subject>carpool tomorrow?</subject>
         <pager>
          <time-stamp>2000-07-09T21:13:00.0Z</time-stamp>
          <from>alice@example.org</from >
          <to>charlie@example.com</to>
         </pager>
       </history>
      </remove>
      </change-log>
    </document>
    </xcap-diff>
``` |

### [Disclosure]

### [Technical Problem]

I. Existing mechanism does not allow User to set reminders
II. Existing mechanism does not encourage User to retrieve deferred messages
III. User may lose deferred messages when Service Provider deletes deferred messages
IV. Poor user experience

CN-1794722-A discloses a transmitting method for off-line messages used in an instant message (IM) system of SIP/SIMPLE. When a customer end registers on the system, an IM server detects that the system stores the off-line message sent to said customer end. The IM server obtains the off-line content of said customer end in the system and sends the content to said customer end.

EP-1530380-A1 discloses a method which involves signaling to receiver using a first notification message that a message for the receiver is being held. The first notification message contains information that describes a first message validity notification and the receiver is informed about the expiry of the held message with a second notification message.

### [Technical Solution]

Embodiments of the present invention describe a mechanism for a user to be reminded about deferred messages currently stored on a Server or waiting for retrieval, before the message is deleted due to Service Provider policy or its associated expiration time. Embodiments of the invention increase the chances of User retrieving the Deferred Messages and minimize User losing messages either because of Service Provider policy or associated expiration. In certain embodiments, reminders can be sent by the Server:
a. at the time before Service Provider decides to delete them and/or
b. after lapse of User set duration for reminders.

According to a first aspect of the present invention there is provided a method for sending a reminder to a user about a deferred message in an SIP based messaging application, the method comprising: receiving (404,304), by a server from a client, an SIP SUBSCRIBE message including a reminder duration or receiving, by the server from the client, an SIP PUBLISH message including a reminder duration and an SIP SUBSCRIBE message; sending (406,308) a notification, from the server to the client, by updating metadata at the server and sending the updated metadata in a first SIP NOTIFY message; and after the reminder duration has elapsed from a time when the notification is sent, sending (409,311) a repeated reminder in a second SIP NOTIFY message, from the server to the client, according to a user preference in the SIP PUBLISH message or according to the SIP SUBSCRIBE message.

According to a second aspect of the present invention there is provided a sever configured to send a reminder to a user about a deferred message in an SIP based messaging application according to the provided method.

### [Advantageous Effects]

1. Invention allows the User to set reminders
2. Encourages User to retrieve Deferred Messages - thus giving more revenue to Service Provider
3. Reduces the chances of User losing some important messages (without warning)
4. Good user experience

### [Description of Drawings]

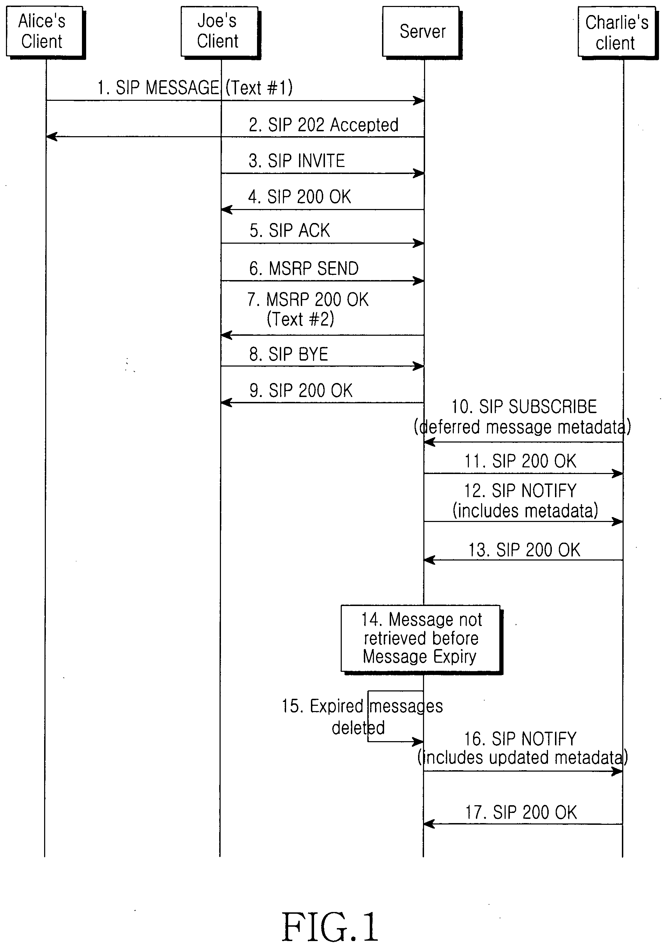

Figure 1 depicts OMA developed solution for Deferred Messages in SIMPLE Architecture.

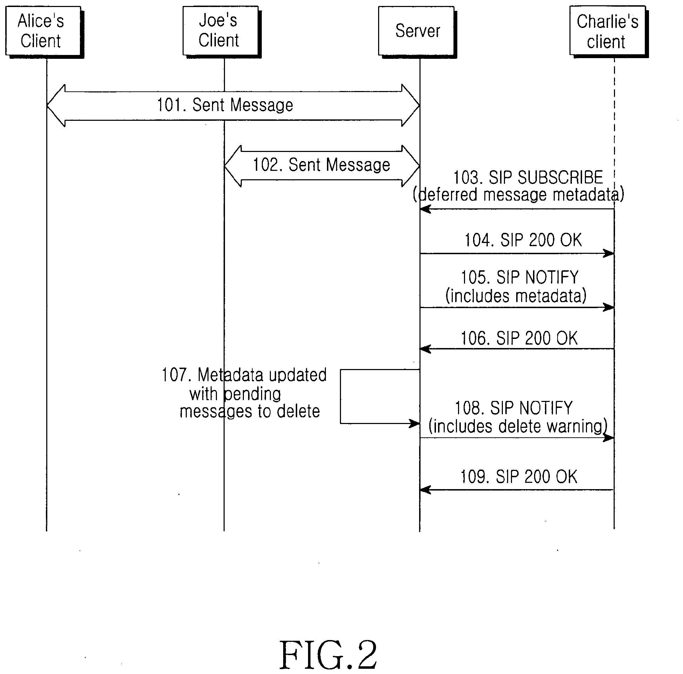

Figure 2 depicts Server Updating Metadata for the messages that are pending to be deleted and Notifying of such updated Metadata.
Figure 3 depicts Server Notifying about soon to be deleted messages through SIP MESSAGE.

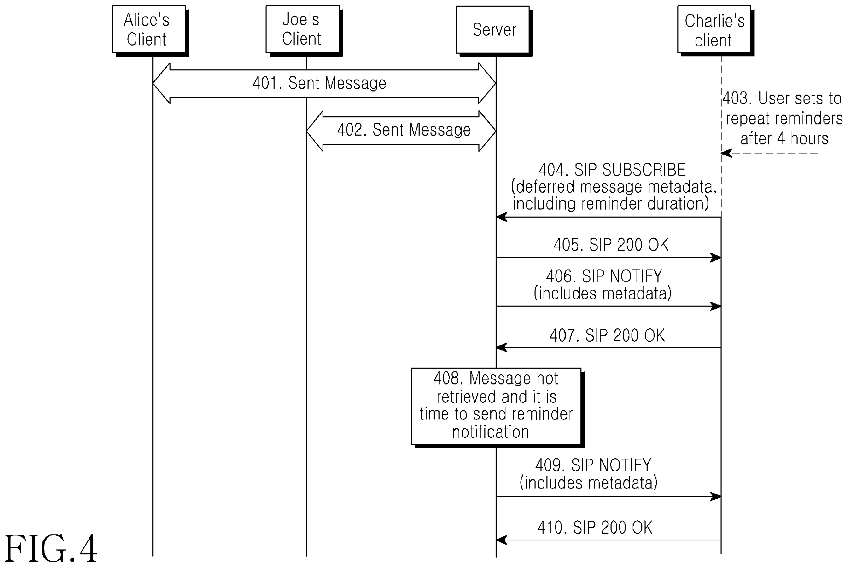

Figure 4 depicts User requesting Server to repeat reminder notifications by using SIP SUBSCRIBE.

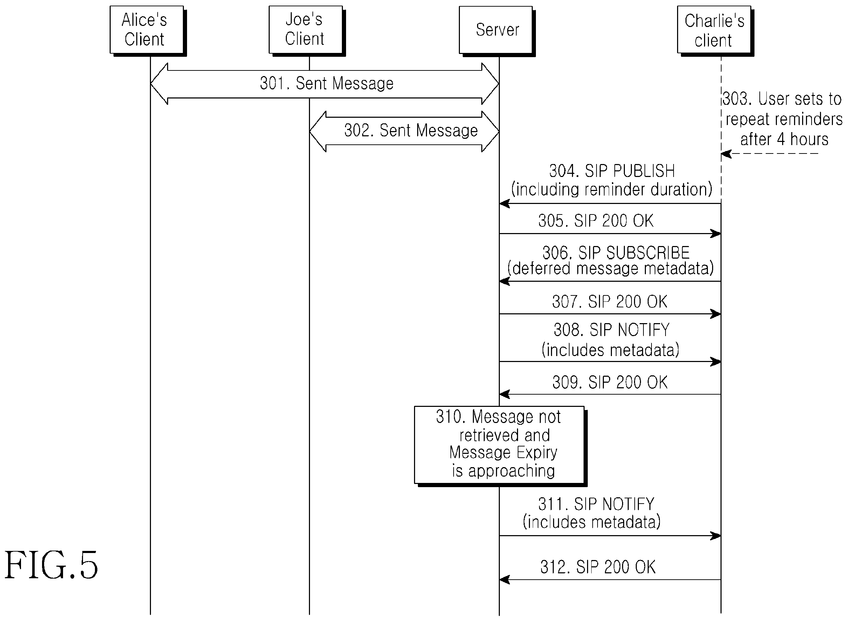

Figure 5 depicts User requesting Server to repeat reminder notifications by publishing User Preferences to Server.

### [Best Mode]

The preferred embodiments of the present invention will now be explained with reference to the accompanying drawings. It should be understood however that the disclosed embodiments are merely exemplary of the invention, which may be embodied in various forms. The following description and drawings are not to be construed as limiting the invention and numerous specific details are described to provide a thorough understanding of the present invention, as the basis for the claims and as a basis for teaching one skilled in the art how to make and/or use the invention. However in certain instances, well-known or conventional details are not described in order not to unnecessarily obscure the present invention in detail.

This invention describes a mechanism for the user to be reminded about deferred messages currently stored on Server or waiting for retrieval, before the message is deleted due to Service Provider policy or its associated expiration time. This invention proposes the method to increase the chances of User retrieving the Deferred Messages and minimize User losing messages either because of Service Provider policy or associated expiration. Reminders can be sent by the Server.
a. at the time before Service Provider decides to delete them and/or
b. after elapse of User set duration for reminders.

Methods for Server sending the warning message before the deletion of the deferred messages in accordance with the present invention include:
Method 1. Server Updating Metadata for the messages that are pending to be deleted and Notifying of such updated Metadata.
Method 2. Server Notifying about soon to be deleted messages through SIP MESSAGE.

Methods for User requesting for repeat reminder notifications:
Method 3. User requesting Server to repeat reminder notifications by using SIP SUBSCRIBE.
Method 4. User requesting Server to repeat reminder notifications by publishing User Preferences to Server.

### Method 1. Server Updating Metadata for the messages that are pending to be deleted and Notifying of such updated Metadata

The invention proposes to add an attribute "status" to the <expiry> element in the Deferred Message metadata. "status" attribute can have value
"no-pending-deletion"- default value, meaning there is more time before Server deletes the Deferred Message
"pending-deletion"- meaning time is approaching to delete the Deferred Message

Service Provider policy will decide on when to change the value of "status" attribute from "no-pending-deletion" to "pending-deletion".

When the Deferred Message metadata is created by the Server, the default value for "status" attribute will be "no-pending-deletion". When the time is approaching for deletion of certain Deferred Message, the Server changes the value of "status" attribute from "no-pending-deletion" to "pending-deletion". As this corresponds to the changes in metadata the Server is triggered to send SIP NOTIFY to the User containing the warning about the soon to be deleted Deferred Messages in the "status" attribute.

Such new "status" attribute can be defined for various applications like IM, PoC, CPM, etc.

As an example, Figure-2 shows the method for Server Updating Deferred Message Metadata for the messages that are pending to be deleted and then sending Notifications.

A brief explanation of the flow diagram in Figure-2 is as follows:
Consider that an offline user (Charlie), gets back on line and receives the following notification indicating that there are two text messages waiting to be retrieved:

While a user (Charlie) is offline:
Step 101. Alice sends an IM with SIP MESSAGE method, the Message is accepted by Charlie's Message Server and stored with a unique Identifier
Step 102. Joe sends an IM using SIP INVITE, the Message is accepted by Charlie's Message Server (Message Store), and stored with a unique identifier

While Charlie gets back online:
Step 103- Step 106. Charlie gets notification via SIP SUBSCRIBE/NOTIFY of the summary of the stored messages waiting to be retrieved. Message headers such as To, From, Date, Subject, and Message-ID included for each message.

**[Table 3]**

| |
|---|
| ```
   NOTIFY sip:charlie@pc.example.com SIP/2.0
    To: <sip:charlie@example.com>;tag=78923
    From: <sip:mailserver.example.com>;tag=4442
   Date: Mon, 10 Jul 2000 04:28:53 GMT
    Contact: <sip:mailserver.example.com>
    Call-ID: adsf0923jsdjw
    CSeq: 31 NOTIFY
    Subscription-State: active;expires=600000
   Event: ua-profile
    Content-Type: application/vnd.oma.deferred+xml
    Content-Length: (...)
   <?xml version="1.0" encoding="UTF-8"?>
   <history-list xmlns="urn:oma:xml:history-list">
                   <history date="2000-07-09" history-
                   reference="32098d@mailserver.example.com">
       <size>10</size>
       <expiry>2000-07-15T21:13:00.0Z; status="no-pending-deletion"</expiry>
       <subject>carpool tomorrow?</subject>
       <pager>
        <time-stamp>2000-07-09T21:13:00.0Z</time-stamp>
        <from>alice@example.org</from >
        <to>charlie@example.com</to>
        </pager>
      </history>
                   <history date="2000-07-09" history-
                   reference="d0982dkjs@mailserver.example.com">
       <size>18</size>
       <expiry>2000-07-17T21:25:12.0Z; status="no-pending-deletion"</expiry>
       <subject>HELP! at home ill, present for me please</subject>
       <pager>
        <time-stamp>2000-07-09T21:25:12.0Z</time-stamp>
        <from>Joe@example.net</from >
        <to>charlie@example.com</to>
        </pager>
        </history>
``` |
| ```
        </history-list>
``` |

Step 107. Let us assume that Charlie does not want to retrieve immediately and hence defers further. Some of the messages waiting for retrieval are nearing to expire and hence Server updates the metadata of those messages i.e., "status" attribute value is changed from "no-pending-deletion" to "pending-deletion". In this example say, "status" attribute value of message from Alice is changed from "no-pending-deletion" to "pending-deletion".

Step 108. Charlie gets updated notification via SIP SUBSCRIBE/NOTIFY for the messages that are pending to deletion. Message headers such as To, From, Date, Subject, and Message-ID included for each message.

**[Table 4]**

| |
|---|
| ```
   NOTIFY sip:charlie@pc.example.com SIP/2.0
   To: <sip:charlie@example.com>;tag=78923
   From: <sip:mailserver.example.com>;tag=4442
   Date: Mon, 10 Jul 2000 04:28:53 GMT
   Contact: <sip:mailserver.example.com>
   Call-ID: adsf0923jsdjw
   CSeq: 31 NOTIFY
   Subscription-State: active;expires=600000
   Event: ua-profile
   Content-Type: application/xcap-diff+xml
   Content-Length: (...)
   <xcap-diff>
   <document>
     <change-log>
      <replace>
                    <history date="2000-07-09" history-
                    reference="32098d@mailserver.example.com">
        <size> 1 0</size>
        <expiry>2000-07-15T21:13:00.0Z; status="pending-deletion"</expiry>
        <subject>carpool tomorrow?</subject>
        <pager>
          <time-stamp>2000-07-09T21:13:00.0Z</time-stamp>
          <from>alice@example.org</from>
``` |
| ```
         <to>charlie@example.com</to>
        </pager>
       </history>
      </replace>
     </change-log>
   </document>
   </xcap-diff>
``` |

On receiving such notification, the User is prompted to can take immediate action to retrieve the Deferred Message or else he may lose that particular Deferred message.

Server deletes the Deferred Message even if not retrieved by the User.

### Method 2. Server Notifying about soon to be deleted messages through SIP MESSAGE

The invention proposes to define new XML element structure for carrying the warning about the Deferred messages to be deleted soon. This new XML element is carried as a body in the SIP MESSAGE method.

Below is the proposal for new XML structure:

```
   <deferred-message-warning>
     <history>
          :
     </history>
   <warning> You may lose the messages if not retrieved before tomorrow.
   </warning>
   </deferred-message-warming>
```

Along with <message-ID> the Server may include other Deferred Message headers like To, From, Date, Subject etc. The new XML structure is defined as new Content-Type "application/deferred-message-deletion-warming+xml".

Warning carried in the SIP MESSAGE method is sent, allowing reasonable time for the User to retrieve Deferred Messages. It is up to Service Provider policy discretion to decide what time is to be considered as reasonable time frame.

Such warning can be sent irrespective of applications like IM, PoC, CPM etc.

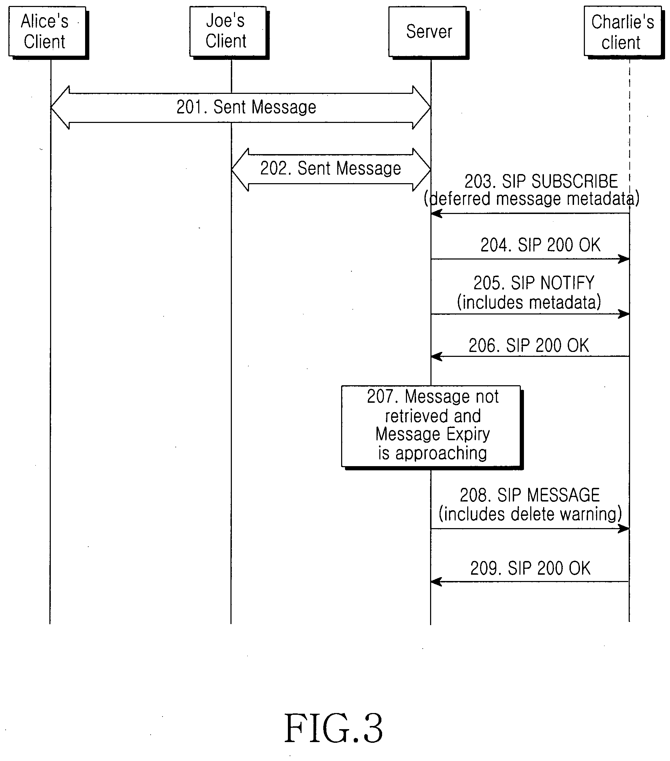

As an example, Figure 3 shows the method for Server Notifying about soon to be deleted messages through SIP MESSAGE.

The warning carried in SIP MESSAGE can be sent by the Server outside the existing dialog.

A brief explanation of the flow diagram in Figure 3 is as follows:
Consider that an offline user (Charlie), gets back on line and receives the following notification indicating that there are two text messages waiting to be retrieved:
While a user (Charlie) is offline:
   Step 201. Alice sends an IM with SIP MESSAGE method, the Message is accepted by Charlie's Message Server and stored with a unique Identifier
   Step 202. Joe sends an IM using SIP INVITE, the Message is accepted by Charlie's Message Server (Message Store), and stored with a unique identifier
While Charlie gets back online:
   Step 203- Step 206. Charlie gets notification via SIP SUBSCRIBE/NOTIFY of the summary of the stored messages waiting to be retrieved. Message headers such as To, From, Date, Subject, and Message-ID included for each message.

**[Table 5]**

| |
|---|
| ```
   NOTIFY sip:charlie@pc.example.com SIP/2.0
   To: <sip:charlie@example.com>;tag=78923
   From: <sip:mailserver.example.com>;tag=4442
   Date: Mon, 10 Jul 2000 04:28:53 GMT
   Contact: <sip:mailserver.example.com>
   Call-ID: adsf0923jsdjw
   CSeq: 31 NOTIFY
   Subscription-State: active;expires=600000
   Event: ua-profile
   Content-Type: application/vnd.oma.deferred+xml
   Content-Length: (...)
   <?xml version="1.0" encoding="UTF-8"?>
   <history-list xmlns="urn:oma:xml:history-list">
                   <history date="2000-07-09" history-
                   reference="32098d@mailserver.example.com">
      <size> 1 0</size>
      <expiry>2000-07-15T21:13:00.0Z</expiry>
      <subject>carpool tomorrow?</subject>
      <pager>
      <time-stamp>2000-07-09T21:13:00.0Z</time-stamp>
``` |
| ```
         <from>alice@example.org</from>
         <to>charlie@example.com</to>
        </pager>
      </history>
                   <history date="2000-07-09" history-
                   reference="d0982dkjs@mailserver.example.com">
       <size>18</size>
       <expiry>2000-07-17T21:25:12.0Z</expiry>
       <subject>HELP! at home ill, present for me please</subject>
       <pager>
        <time-stamp>2000-07-09T21:25:12.0Z</time-stamp>
         <from>Joe@example.net</from >
         <to>charlie@example.com</to>
        </pager>
      </history>
      </history-list>
``` |

Step 207. Let us assume that Charlie does not want to retrieve immediately and hence defers further. Some of the messages waiting for retrieval are nearing to expire and hence Server decides to send warning message that some of the Deferred Messages will be deleted soon.

Step 208. Charlie gets updated notification via SIP SUBSCRIBE/NOTIFY (IETF RFC 3842) for the messages that are pending to deletion. Deferred Message headers such as To, From, Date, Subject, and Message-ID may also be included for each message in the new XML Content-Type:

**[Table 6]**

| |
|---|
| ```
    MESSAGE sip:charlie@pc.example.com SIP/2.0
    To: <sip:charlie@example.com>;tag=78923
    From: <sip:mailserver.example.com>;tag=4442
    Call-ID: adsf0923jsdjw
    CSeq: 31 MESSAGE
    Content-Type: application/deferred-message-deletion-warning+xml
    Content-Length: (...)
    <deferred-message-warning>
``` |
| ```
                   <history date="2000-07-09" history-
                   reference="32098d@mailserver.example.com">
       <size>10</size>
       <expiry>2000-07-15T21:13:00.0Z</expiry>
       <subject>carpool tomorrow?</subject>
       <pager>
        <time-stamp>2000-07-09T21:13:00.0Z</time-stamp>
        <from>alice@example.org</from >
        <to>charlie@example.com</to>
        </pager>
      </history>
       <warning> You may lose the messages if not retrieved before
       tomorrow.</warning>
       </deferred-message-warning>
``` |

On receiving such notification, the User is prompted to can take immediate action to retrieve the Deferred Message or else he may lose that particular Deferred message.

Server deletes the Deferred Message even if not retrieved by the User.

### Method 3. User requesting Server to repeat reminder notifications by using SIP SUBSCRIBE

The invention proposes to add new XML element for allowing User to request the reminder duration. This new XML element is carried in the body of SIP SUBSCRIBE when the Client is requesting for Deferred Message Metadata.

Below is the proposal for new XML structure:

```
    <Deferred-message-reminder>
          <reminder-duration repeat=yes> 14400 </reminder-duration>
    </Deferred-message-reminder>
```

The duration element contains the amount of time, in seconds, to send notifications since the SIP SUBSCRIBE request received by the Server.

"repeat" attribute tells the Server whether to send repeat notification or not.

Server sends the repeat SIP NOTIFY after the duration requested by the User elapses. The new XML structure is defined as new Content-Type "application/deferred-message-reminder+xml".

Alternately, the reminder request can also be carried as a new event state parameter. E g., Event: ua-profile; deferred-message-reminder=14400

The above specified reminder request can be sent in various applications like IM, PoC, CPM etc.

As an example, Figure-4 shows the method for User requesting Server to repeat reminder notifications by using SIP SUBSCRIBE.

A brief explanation of the flow diagram in Figure-4 is as follows:
Consider that an offline user (Charlie), gets back on line and receives the following notification indicating that there are two text messages waiting to be retrieved:
While a user (Charlie) is offline:
   Step 401. Alice sends an IM with SIP MESSAGE method, the Message is accepted by Charlie's Message Server and stored with a unique Identifier
   Step 402. Joe sends an IM using SIP INVITE, the Message is accepted by Charlie's Message Server (Message Store), and stored with a unique identifier:
While Charlie gets back online:
   Step 403. Charlie chooses to receive the reminder after every 4 hours
   Step 404- Step 405. Charlie's Client requests subscription to Deferred Message Metadata via SIP SUBSCRIBE with deferred message reminder request in content format defined by "application/deferred-message-deletion-warning+xml". The new content type is carried as a multipart body in the SIP SUBSCRIBE request. See below:

**[Table 7]**

| |
|---|
| ```
   <deferred-message-reminder>
             <reminder-duration repeat=yes> 14400 </reminder-duration>
             </deferred-message-reminder>
``` |

Alternately, Step 404 - Step 405. When the Deferred Message Reminder is carried as a new event state parameter, Charlie's Client requests subscription to Deferred Message Metadata via SIP SUBSCRIBE with deferred message reminder request in Event header. See below:

**[Table 8]**

| |
|---|
| ```
    SUBSCRIBE sip:charlie@pc.example.com SIP/2.0
    To: <sip:mailserver.example.com>;tag=78923
    From: <sip:charlie@example.com>;tag=4442
    Date: Mon, 10 Jul 2000 04:28:53 GMT
    Contact: <sip:charlie@pc.example.com>
``` |
| ```
   Call-ID: adsf0923jsdjw
   CSeq: 31 SUBSCRIBE
   Event: ua-profile; deferred-message-reminder=14400
   Content-Length: (...)
``` |

Step 406 - Step 407. Charlie gets notification via SIP NOTIFY of the summary of the stored messages waiting to be retrieved. Message headers such as To, From, Date, Subject, and Message-ID included for each message, see below:

**[Table 9]**

| |
|---|
| ```
   NOTIFY sip:charlie@pc.example.com SIP/2.0
   To: <sip:charlie@example.com>;tag=78923
   From: <sip:mailserver.example.com>;tag=4442
   Date: Mon, 10 Jul 2000 04:28:53 GMT
   Contact: <sip:mailserver.example.com>
   Call-ID: adsf0923jsdjw
   CSeq: 31 NOTIFY
   Subscription-State: active;expires=600000
   Event: ua-profile
   Content-Type: application/ vnd.oma.deferred+xml
   Content-Length: (...)
   <?xml version="1.0" encoding="UTF-8"?>
   <history-list xmlns="um:oma:xml:history-list">
                   <history date="2000-07-09" history-
                   reference="32098d@mailserver.example.com">
      <size>10</size>
      <expiry>2000-07-15T21:13:00.0Z</expiry>
      <subject>carpool tomorrow?</subject>
       <pager>
        <time-stamp>2000-07-09T21:13:00.0Z</time-stamp>
        <from>alice@example.org</from >
        <to>charlie@example.com</to>
        </pager>
      </history>
                   <history date="2000-07-09" history-
                   reference="d0982dkjs@mailserver.example.com">
``` |
| ```
      <size>18</size>
      <expiry>2000-07-17T21:25:12.0Z</expiry>
      <subject>HELP! at home ill, present for me please</subject>
      <pager>
        <time-stamp>2000-07-09T21:25:12.0Z</time-stamp>
        <from>Joe@example.net</from >
        <to>charlie@example.com</to>
        </pager>
      </history>
      </history-list>
``` |

Step 408. Let us assume that Charlie does not want to retrieve immediately and hence defers further. After the User requested duration has elapsed from the time the previous SIP NOTIFY was sent, the Server decides to send the repeat notification. Note that if the User has retrieved all the Deferred Messages, the Server will not send the repeat notification.

Step 409- Step 410. Same as Step 406, Step 407On receiving such repeat notifications, the User is prompted to take an immediate action to retrieve the Deferred Message or else he may lose that particular Deferred message.

### Method 4. User requesting Server to repeat reminder notifications by publishing User Preferences to Server

The invention proposes to add new XML element for allowing User to request the reminder duration. This new XML element is carried in the body of SIP PUBLISH when the Client is publishing Service Settings or User Preferences to the Server.

Below is the proposal for new XML structure:

```
   <deferred-message-reminder>
          <reminder-duration repeat=yes> 14400 </reminder-duration>
   </deferred-message-reminder>
```

The duration element contains the amount of time, in seconds, to send notifications since the SIP SUBSCRIBE request received by the Server.

"repeat" attribute tells the Server whether to repeat notification every reminder duration or not.

Server sends the repeat SIP NOTIFY after the duration for reminder elapses. Note that the new element <deferred-message-reminder> is present only in the case where the User has indicated Deferred Messages delivery method as "notify before delivering" and not "Push".

The new element <deferred-message-reminder> can be used by various applications like IM, PoC, CPM etc.

The proposed new XML element will be part of OMA defined <deferred-settings> which is used for controlling the delivery of deferred messages.

Structure of OMA defined <deferred-settings> is shown as below:
The <deferred-settings> XML element contains zero or one <offline-delivery> element that contains a Boolean type of "active" XML attribute. The "active" attribute indicates whether the messages stored during the offline period of the client are pushed to the client when the client gets on-line. When the user prefers to get the messages pushed the value of the "active" attribute is set to 'true'. The default value of the "active" attribute is 'false' unless other local policies exit. Other elements and attributes from other namespaces MAY be present for the purposes of extensibility; elements and attributes from unknown namespaces MUST be ignored. The <deferred-settings> element must contain at least one child XML element.

As an example, Figure-5 shows the method for User requesting to repeat reminder notifications by using User Preferences.

A brief explanation of the flow diagram in Figure-5 is as follows:
Consider that an offline user (Charlie), gets back on line and receives the following notification indicating that there are two text messages waiting to be retrieved:
While a user (Charlie) is offline:
   Step 301. Alice sends an IM with SIP MESSAGE method, the Message is accepted by Charlie's Message Server and stored with a unique Identifier
   Step 302. Joe sends an IM using SIP INVITE, the Message is accepted by Charlie's Message Server (Message Store), and stored with a unique identifier
While Charlie gets back online:
   Step 303. Charlie chooses to receive the reminder after every 4 hours
   Step 304- Step 405. Charlie's Client publishes Service Settings or User Preferences via SIP PUBLISH. See below:

**[Table 10]**

| |
|---|
| ```
   <deferred-settings service-id="IM">
        <offline-delivery active="false"/>
                  <reminder>
                  <duration repeat=yes> 14400 </duration>
``` |
| ```
        </reminder>
        </offline-delivery>
        </deferred-settings>
``` |

Step 306- Step 307. Charlie subscribes for deferred message metadata via SIP SUBSCRIBE

Step 308- Step 309. Charlie gets notification via SIP NOTIFY of the summary of the stored messages waiting to be retrieved. Message headers such as To, From, Date, Subject, and Message-ID included for each message, see below:

**[Table 11]**

| |
|---|
| ```
   NOTIFY sip:charlie@pc.example.com SIP/2.0
   To: <sip:charlie@example.com>;tag=78923
   From: <sip:mailserver.example.com>;tag=4442
   Date: Mon, 10 Jul 2000 04:28:53 GMT
   Contact: <sip:mailserver.example.com>
   Call-ID: adsf0923jsdjw
   CSeq: 31 NOTIFY
   Subscription-State: active;expires=600000
   Event: ua-profile
   Content-Type: application/ vnd.oma.deferred+xml
   Content-Length: (...)
   <?xml version="1.0" encoding="UTF-8"?>
   <history-list xmlns="urn:oma:xml:history-list">
                   <history date="2000-07-09" history-
                   reference="32098d@mailserver.example.com">
      <size> 1 0</size>
      <expiry>2000-07-15T21:13:00.0Z</expiry>
      <subject>carpool tomorrow?</subject>
      <pager>
        <time-stamp>2000-07-09T21:13:00.0Z</time-stamp>
        <from>alice@example.org</from >
        <to>charlie@example.com</to>
        </pager>
      </history>
      <history date="2000-07-09" history-
``` |
| ```
      reference="d0982dkjs@mailserver.example.com">
      <size>18</size>
      <expiry>2000-07-17T21:25:12.0Z</expiry>
      <subject>HELP! at home ill, present for me please</subject>
      <pager>
        <time-stamp>2000-07-09T21:25:12.0Z</time-stamp>
        <from>Joe@example.net</from>
        <to>charlie@example.com</to>
        </pager>
      </history>
      </history-list>
``` |

Step 310. Let us assume that Charlie does not want to retrieve immediately and hence defers further. After the User requested duration has elapsed from the time the previous SIP NOTIFY was sent, the Server decides to send the repeat notification. If the User has retrieved all the Deferred Messages, the Server will not send the repeat notification.

Step 311- Step 312. Repeat Step 308, Step 309.

On receiving such repeat notifications, the User is prompted to can take an immediate action to retrieve the Deferred Message or else he may lose that particular Deferred message.

### GLOSSARY OF TERMS AND DEFINITIONS THEREOF

OMA - Open Mobile Alliance
SIP - Session Initiation Protocol
IM - Instant Messaging
PoC - Push to Talk Over Cellular
XML - Extended Markup Language
XDM - XML Document Management
XCAP - XML Configuration Access Protocol
SIMPLE - SIP for Instant Messaging and Presence Leveraging Extensions.
MMS - Multimedia Messaging Service
CPM - Converged IP Messaging
IETF - The Internet Engineering Task Force
RFC - Request For Comments

## Claims

1. A method for sending a reminder to a user about a deferred message in an SIP based messaging application, the method comprising:
receiving, by a server from a client, an SIP SUBSCRIBE message (404) including a reminder duration or receiving, by the server from the client, an SIP PUBLISH message (304) including a reminder duration and an SIP SUBSCRIBE message (306); wherein the SIP SUBSCRIBE message (404, 306) is a subscription for deferred message metadata; sending a notification, from the server to the client, by updating deferred message metadata at the server and sending the updated deferred message metadata in a first SIP NOTIFY message (406,308); and
after the reminder duration has elapsed from a time when the notification is sent, sending a repeated reminder in a second SIP NOTIFY message (409, 311), from the server to the client, according to a user preference in the SIP PUBLISH message (304) or according to the SIP SUBSCRIBE message (404).

2. The method as claimed in claim 1, further comprising the server updating deferred message metadata for messages that are pending to be deleted.

3. The method as claimed in claim 2, wherein an attribute "status" is added in the deferred message metadata where the "status" attribute can have a value "no-pending-deletion", meaning there is more time before the server deletes the deferred message or a value "pending-deletion", meaning the time is approaching for the server to delete the deferred message.

4. The method as claimed in claim 1, wherein a new XML element is added allowing the client to request the reminder duration, wherein the new XML element is carried in the body of the SIP SUBSCRIBE message (404) or the SIP PUBLISH message (304).

5. The method according to claim 4, wherein the new XML element contains a "repeat" attribute to tell the server whether to send a repeat notification or not.

6. A server configured to send a reminder to a user about a deferred message in an SIP based messaging application according to the method of any of claims 1 to 5.

## Patentansprüche

1. Verfahren zum Senden einer Erinnerung an einen Benutzer über eine zurückgestellte Nachricht in einer SIP-basierten Anwendung zur Nachrichtenübermittlung, wobei das Verfahren aufweist:
Empfangen, durch einen Server von einem Client, einer SIP-Nachricht SUBSCRIBE (Anmeldung) (404) mit einer Erinnerungsdauer, oder Empfangen, durch den Server von dem Client, einer SIP Nachricht PUBLISH (Veröffentlichung) (304) mit einer Erinnerungsdauer und einer SIP-Nachricht SUBSCRIBE (Anmeldung) (306);
wobei die SIP-Nachricht SUBSCRIBE (404, 306) eine Anmeldung für zurückgestellte Nachrichten-Metadaten ist;
Senden einer Benachrichtigung, von dem Server an den Client, durch Aktualisieren von zurückgestellten Nachrichten-Metadaten am Server und Senden der aktualisieren zurückgestellten Nachrichten-Metadaten in einer ersten SIP-Nachricht NOTIFY (Benachrichtigung) (406, 308); und
nach Ablauf der Erinnerungsdauer ab einem Zeitpunkt, an dem die Benachrichtigung gesendet wurde, Senden einer wiederholten Erinnerung in einer zweiten SIP-Nachricht NOTIFY (Benachrichtigung) (409, 311) von dem Server zu dem Client gemäß einer Benutzervoreinstellung in der SIP-Nachricht PUBLISH (304) oder gemäß der SIP-Nachricht SUBSCRIBE (404).

2. Verfahren nach Anspruch 1, ferner aufweisend , dass der Server zurückgestellte Nachrichten-Metadaten für Nachrichten aufweist, die zum Löschen anstehen.

3. Verfahren nach Anspruch 2, wobei ein Attribut "Status" in den zurückgestellten Nachrichten-Metadaten hinzugefügt wird, wobei das "Status"-Attribut einen Wert "keine anstehende Löschung" haben kann, was bedeutet, dass mehr Zeit zur Verfügung steht, bevor der Server die zurückgestellte Nachricht löscht, oder einen Wert "anstehende Löschung", was bedeutet, dass sich für den Server der Zeitpunkt zum Löschen der zurückgestellten Nachricht nähert.

4. Verfahren nach Anspruch 1, wobei ein neues XML-Element hinzugefügt wird, das dem Client ein Abfragen der Erinnerungsdauer ermöglicht, wobei das neue XML-Element im Text der SIP-Nachricht SUBSCRIBE (404) oder der SIP-Nachricht PUBLISH (304) übertragen wird.

5. Verfahren nach Anspruch 4, wobei das neue XML-Element ein "Wiederholen"-Attribut enthält, das dem Server angibt, ob eine Wiederholungsbenachrichtigung gesendet werden soll.

6. Server, konfiguriert zum Senden einer Erinnerung an einen Benutzer über eine zurückgestellte Nachricht in einer SIP-basierten Anwendung zur Nachrichtenübermittlung gemäß dem Verfahren nach Anspruch 1 bis 5.

## Revendications

1. Méthode d'envoi d'un rappel à un utilisateur concernant un message différé dans une application de messagerie basée sur le protocole SIP, la méthode comprenant :
la réception, d'un client par un serveur, d'un message SIP SUBSCRIBE (404) comprenant une durée du rappel, ou la réception, du client, par le serveur, d'un message SIP PUBLISH (304), comprenant une durée du rappel, et d'un message SIP SUBSCRIBE (306) ;
le message SIP SUBSCRIBE (404, 306) étant un abonnement pour des métadonnées de message différé ;
l'envoi d'une notification, du serveur au client, par la mise à jour des métadonnées de message différé au serveur, et l'envoi des métadonnées de message différé mises à jour dans un premier message SIP NOTIFY (406,308) ; et
après l'écoulement de la durée du rappel, à partir d'une heure à laquelle la notification a été envoyée, l'envoi d'un rappel répété dans un deuxième message SIP NOTIFY (409, 311), du serveur au client, conformément à une préférence de l'utilisateur dans le message SIP PUBLISH (304), ou d'après le message SIP SUBSCRIBE (404).

2. Méthode selon la revendication 1, comprenant en outre la mise à jour par le serveur de métadonnées de message différé pour des messages en attente de suppression.

3. Méthode selon la revendication 2, un attribut « status » (état) étant ajouté aux métadonnées de message différé, la valeur de l'attribut « status » (état) pouvant être « no-pending-deletion », ce qui signifie qu'il reste du temps avant la suppression du message différé par le serveur, ou « pending-deletion », ce qui signifie que l'heure à laquelle le serveur supprimera le message différé approche.

4. Méthode selon la revendication 1, un nouvel élément XML étant ajouté, pour permettre au client de demander la durée du rappel, le nouvel élément XML étant contenu dans le corps du message SIP SUBSCRIBE (404) ou du message SIP PUBLISH (304).

5. Méthode selon la revendication 4, le nouvel élément XML contenant un attribut « repeat » (de répétition) pour demander au serveur d'envoyer une notification de répétition ou non.

6. Serveur configuré pour envoyer un rappel à un utilisateur concernant un message différé dans une application de messagerie basée sur le protocole SIP, selon la méthode d'une quelconque des revendications 1 à 5.
